(19) Europäisches Patentamt
European Patent Office
Office européen des brevets

(11) Veröffentlichungsnummer: **0 337 200 B1**

# (12) EUROPÄISCHE PATENTSCHRIFT

(45) Veröffentlichungstag der Patentschrift: **07.06.95**

(51) Int. Cl.[6]: **C09B 1/20**, D06P 5/00

(21) Anmeldenummer: **89105588.1**

(22) Anmeldetag: **30.03.89**

Die Akte enthält technische Angaben, die nach dem Eingang der Anmeldung eingereicht wurden und die nicht in dieser Patentschrift enthalten sind.

## (54) Verfahren zur Übertragung von Farbstoffen.

(30) Priorität: **12.04.88 DE 3812053**

(43) Veröffentlichungstag der Anmeldung:
**18.10.89 Patentblatt 89/42**

(45) Bekanntmachung des Hinweises auf die Patenterteilung:
**07.06.95 Patentblatt 95/23**

(84) Benannte Vertragsstaaten:
**CH DE FR GB IT LI**

(56) Entgegenhaltungen:
**EP-A- 0 098 736**
**DE-A- 2 614 604**
**FR-A- 1 538 206**
**FR-A- 2 409 285**

**JAPANESE PATENTS GAZETTE, Woche 8804, 9. März 1988, Sektion Ch, Klasse G, Seite 35, Nr. 88-026378/04, Derwent Publications Ltd., London, GB; & JP-A-62 288 656 (MITSUI TOATSU CHEM. INC.) 15.12.1987**

**PRINCIPLES OF NONIMPACT PRINTING, second edition, 1992, pages 212 ff**

(73) Patentinhaber: **BASF Aktiengesellschaft**
**Carl-Bosch-Strasse 38**
**D-67063 Ludwigshafen (DE)**

(72) Erfinder: **Bach, Volker, Dr.**
**Robert-Schumann-Strasse 8**
**D-6730 Neustadt (DE)**
Erfinder: **Sens, Ruediger, Dr.**
**Medicusstrasse 12**
**D-6800 Mannheim 1 (DE)**
Erfinder: **Etzbach, Karl-Heinz, Dr.**
**Carl-Bosch-Ring 55**
**D-6710 Frankenthal (DE)**
Erfinder: **Ruske, Manfred**
**Merziger Strasse 10**
**D-6700 Ludwigshafen (DE)**

EP 0 337 200 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei dem Transferverfahren wird ein Transferblatt oder Farbband, welches einen thermisch transferierbaren Farbstoff und gegebenenfalls ein Bindemittel auf einem Träger enthält, mit einem Heizkopf mit kurzen (Bruchteile einer Sekunde) Heizimpulsen von dei Rückseite erhitzt, wobei eine Transferaufzeichnung auf einen Aufzeichnungskörper erfolgt. Der wesentliche Vorteil dieses Verfahrens besteht darin, daß sie Steuerung der zu übertragenden Farbstoffmenge durch Einstellung der an der Heizkopf abzugebenden Energie (und damit die Farbabstufung) leicht möglich ist.

Allgemein wird die Farbaufzeichnung unter Verwendung der drei subtraktiven Grundfarben Gelb, Magenta und Cyan (und gegebenenfalls Schwarz) durchgeführt. Um eine optimale Farbaufzeichnung zu ermöglichen, müssen die Farbstoffe folgende Eigenschaften besitzen:

- Löslichkeit in üblichen organischen Lösungsmitteln sowie in der Beschichtungsmasse (Binder) des Transferblattes
- Transferierbarkeit bei möglichst geringer Heizleistung des Thermokopfes
- hohe thermische sowie photochemische Stabilität sowie Resistenz gegen Feuchtigkeit und chemische Stoffe
- nur geringe Migration innerhalb oder aus der Oberflächenbeschichtung des Aufnahmemediums bei Raumtemperatur
- bevorzugte Farbtöne für substraktive Farbmischung gewährleisten
- bei Lagerung des Transferblattes keine Kristallisation
- leichte technische Zugänglichkeit.

Die meisten der bekannten, für den thermischen Transferdruck verwendeten Blaufarbstoffe erfüllen diese Forderungen nicht in ausreichendem Maße.

Aus dem Stand der Technik sind für diesen Zweck bereits Farbstoffe bekannt. So werden beispielsweise in der japanischen Patentliteratur 1,4-Diaminoanthrachinonfarbstoffe für den erfindungsgemäßer Verwendungszweck beschrieben, z. B.:

JP-A-151 097/1985

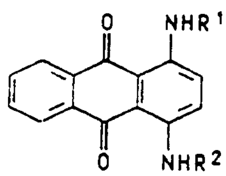

$R^1 = R^2 =$ (subst.) Alkyl
(subst.) Alkenyl
Cyclohexyl ... etc.

JP-A-227 948/1984

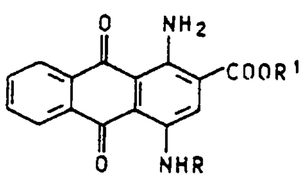

$R = R^1 =$ Methyl, Ethyl, Propyl, Butyl

JP-A-53 563/1985

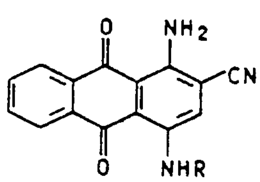

R = H, Methyl, Ethyl, Propyl, Butyl
JP-A-5 993/1988

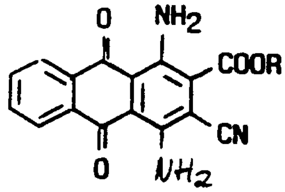

R = Methyl, Ethyl, Propyl, Butyl, 2-Ethylhexyl, 3-Oxabutyl, 3-Oxanonyl.

Substituierte Diaminoanthrachinone sind weiterhin aus der DE-A-26 14 604, der EP-A-98 736 und der FR-A-1 538 206 bekannt. Die dort beschriebenen Verbindungen unterscheiden sich jedoch durch die Art der Substituenten von den erfindungsgemäßen Verbindungen und werden auch für andere Zwecke wie Textildruck, Flüssigkristalle und photographische lichtempfindliche Elemente eingesetzt.

Aufgabe der vorliegenden Erfindung war es, Farbstoffe für den Thermotransfer bereitzustellen, wobei die Farbstoffe

- unter den Anwendungsbedingungen eines Thermokopfes leicht übertragbar sind
- keine oder nur geringe Migrationseigenschaften im Bild bei Raumtemperatur aufweisen
- aus dem Transferblatt nicht auskristallisieren
- keine thermische und photochemische Zersetzung erleiden
- sich zu Druckfarben/Farbbändern verarbeiten lassen
- den koloristischen Anforderungen genügen
- technisch leicht zugänglich sind.

Die Erfindung betrifft ein Verfahren zur Übertragung von Farbstoffen von einem Träger auf einen Acceptor mit Hilfe eines Thermokopfes, dadurch gekennzeichnet, daß man einen Träger verwendet, auf dem sich ein oder mehrere Farbstoffe der Formel I

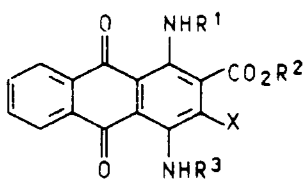

(I)

befinden, in der

X für H oder CN,

$R^1$, $R^2$ und $R^3$ unabhängig voneinander für lineares oder verzweigtes $C_1$-$C_{20}$-Alkyl, für Alkylcarbonyloxyalkyl, Alkoxycarbonyloxyalkyl, Alkoxycarbonylalkyl, Halogenalkyl, Hydroxyalkyl oder Cyanalkyl, wobei diese substituierten Alkylreste insgesamt bis zu 20 C-Atome aufweisen können, für gegebenenfalls durch $C_1$-$C_{20}$-Alkyl oder $C_1$-$C_{20}$-Alkoxy substituiertes Benzyl oder Phenyl oder für Reste der allgemeinen Formel (II)

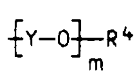

(II)

stehen, worin

Y lineares oder verzweigtes $C_2$-$C_6$-Alkylen,

m 1, 2, 3, 4, 5 oder 6 und

$R^4$ $C_1$-$C_4$-Alkyl oder Phenyl bedeuten,

und

$R^1$ und $R^3$ unabhängig voneinander auch Wasserstoff bedeuten können, mit der Maßgabe, daß wenn X = H ist, $R^1$ und $R^3$ gegebenenfalls substituiertes Alkyl oder gegebenenfalls substituiertes Phenyl bedeuten,

wenn X = H und $R^1$ = H ist, $R^3$ gegebenenfalls durch Alkyl oder Alkoxy substituiertes Phenyl bedeutet, und
wenn X = CN und $R^1$ = $R^3$ = H ist, $R^2$ einen Rest der allgemeinen Formel (IIa)

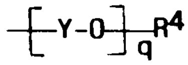

(IIa)

worin
Y für lineares oder verzweigtes $C_2$-$C_6$-Alkylen,
q für 2, 3, 4, 5 oder 6 und
$R^4$ für $C_1$-$C_4$-Alkyl oder Phenyl steht,
bedeutet.

Neben im allgemeinen besseren Löslichkeiten und/oder höheren Lichtechtheiten weisen die Farbstoffe (I) im Vergleich zu den bei bekannten Verfahren verwendeten Farbstoffen überraschend gute bis hervorragende Transfereigenschaften auf, obwohl die bei dem erfindungsgemäßen Verfahren übertragenen Farbstoffe im Vergleich zu den bei den Verfahren des Standes der Technik übertragenen Farbstoff relativ hohe Molekulargewichte aufweisen.

Die Übertragung von Farbstoffen von einem Träger auf eine Nehmerschicht gelingt dann vorteilhaft, wenn man einen Träger verwendet, auf dem sich ein oder mehrere Farbstoffe der Formel (I)

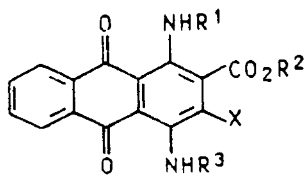

(I)

befinden, in der
X für H oder CN,
$R^1$, $R^2$ und $R^3$ unabhängig voneinander für lineares oder verzweigtes $C_1$-$C_{20}$-Alkyl, für Alkylcarbonyloxyalkyl, Alkoxycarbonyloxyalkyl, Alkoxycarbonylalkyl, Halogenalkyl, Hydroxyalkyl oder Cyanalkyl mit bis zu 20 C-Atomen, für gegebenenfalls durch $C_1$-$C_{20}$-Alkyl oder $C_1$-$C_{20}$-Alkoxy substituiertes Benzyl oder Phenyl oder für Reste der allgemeinen Formel (II)

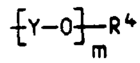

(II)

stehen, worin
Y lineares oder verzweigtes $C_2$-$C_6$-Alkylen,
m 1, 2, 3, 4, 5 oder 6 und
$R^4$ $C_1$-$C_4$-Alkyl oder Phenyl bedeuten,
und
$R^1$ und $R^3$ unabhängig voneinander auch Wasserstoff bedeuten können, mit der Maßgabe, daß
wenn X = H ist, $R^1$ und $R^3$ gegebenenfalls substituiertes Alkyl oder gegebenenfalls substituiertes Phenyl bedeuten,
wenn X = H und $R^1$ = H ist, $R^3$ gegebenenfalls durch Alkyl oder Alkoxy substituiertes Phenyl bedeutet, und
wenn X = CN und $R^1$ = $R^3$ = H ist, $R^2$ einen Rest der allgemeinen Formel (IIa)

$$-[Y-O]_q-R^4 \qquad (IIa)$$

worin

Y für lineares oder verzweigtes $C_2$-$C_6$-Alkylen,

q für 2, 3, 4, 5 oder 6 und

$R^4$ für $C_1$-$C_4$-Alkyl oder Phenyl steht,

bedeutet.

Vorzugsweise führt man das erfindungsgemäße Verfahren mit einem Träger durch, auf dem sich ein oder mehrere Farbstoffe der Formel (III)

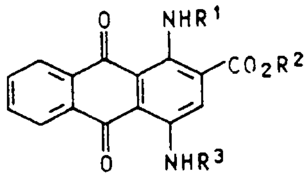

(III)

befinden, in der

$R^1$ für lineares $C_1$-$C_{15}$-Alkyl,

$R^2$ für lineares oder verzweigtes $C_1$-$C_{15}$-Alkyl oder für Reste der allgemeinen Formel (IX)

$$-[Z-O]_n-R^4 \qquad (IX)$$

worin

Z lineares oder verzweigtes $C_2$-$C_4$-Alkylen,

n 1, 2, 3 oder 4 und

$R^4$ $C_1$-$C_4$-Alkyl oder Phenyl

bedeuten, und

$R^3$ für lineares oder verzweigtes $C_1$-$C_{15}$-Alkyl oder für gegebenenfalls durch $C_1$-$C_{15}$-Alkyl oder $C_1$-$C_{15}$-Alkoxy substituiertes Phenyl stehen.

Besonders vorteilhafte Ergebnisse erhält man bei Verwendung ein oder mehrerer Farbstoffe der Formel (IV)

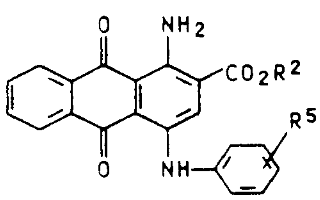

(IV)

in der

$R^2$ für lineares oder verzweigtes $C_1$-$C_{15}$-Alkyl oder einen Rest der allgemeinen Formel (IX)

$$-[Z-O]_n-R^4 \qquad (IX)$$

worin

Z lineares oder verzweigtes $C_2$-$C_4$-Alkylen,

n 1, 2, 3 oder 4 und
$R^4$ $C_1$-$C_4$-Alkyl oder Phenyl
bedeuten, und
$R^5$ für $C_1$-$C_{15}$-Alkyl oder $C_1$-$C_{15}$-Alkoxy stehen.

Ganz besonders gute Ergebnisse erzielt man, wenn man einen oder mehrere Farbstoffe der Formel (V)

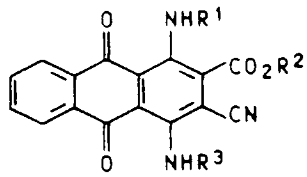

(V)

anwendet, in der

$R^2$ lineares oder verzweigtes $C_1$-$C_{15}$-Alkyl oder einen Rest der allgemeinen Formel (II)

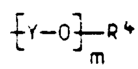

(II)

worin

Y lineares oder verzweigtes $C_2$-$C_6$-Alkylen,
m 1, 2, 3, 4, 5 oder 6 und
$R^4$ $C_1$-$C_4$-Alkyl oder Phenyl
bedeuten, und

$R^1$ und $R^3$ unabhängig voneinander Wasserstoff, gegebenenfalls durch $C_1$-$C_{20}$-, bevorzugt $C_1$-$C_{15}$-Alkyl- oder $C_1$-$C_{20}$-, bevorzugt $C_1$-$C_{15}$-Alkoxy-substituiertes Benzyl oder Phenyl, $C_1$-$C_{20}$-, bevorzugt $C_4$-$C_{15}$-Alkylcarbonyloxyalkyl, $C_1$-$C_{20}$-, bevorzugt $C_4$-$C_{15}$-Alkoxycarbonyloxyalkyl, $C_1$-$C_{20}$-, bevorzugt $C_4$-$C_{15}$-Alkoxycarbonylalkyl, oder $R^1$ und/oder $R^3$ gleich $R^2$ sind,

mit der Maßgabe, daß, wenn $R^1 = R^3 = H$ ist, $R^2$ einen Rest der allgemeinen Formel (IIa)

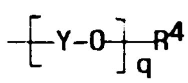

**(IIa)**

worin q für 2, 3, 4, 5 oder 6 steht, bedeutet.

Ganz besonders gute Ergebnisse werden bei Anwendung von Farbstoffen der Formel (V)

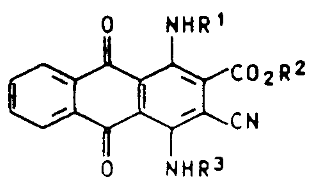

(V)

erzielt. In der Formel (V) bedeuten $R^1$, $R^2$ und $R^3$ unabhängig voneinander lineares oder verzweigtes $C_1$-$C_{15}$-Alkyl oder Reste der allgemeinen Formel (VI)

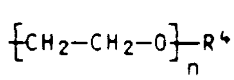

(VI)

worin

n 1, 2, 3, oder 4 und
$R^4$ $C_1$-$C_4$-Alkyl oder Phenyl
bedeuten,

$R^1$ kann auch Wasserstoff sein.

Bevorzugt steht in der Formel (V) mindestens einer der Reste $R^1$, $R^2$ oder $R^3$ für einen Rest der Formel (VI).

Als lineares oder verzweigtes $C_1$-$C_{15}$-Alkyl kommen für $R^1$, $R^2$, $R^3$ im einzelnen z.B. in Betracht: Methyl, Ethyl, n-Propyl, n-Butyl, Pentyl, Hexyl, Heptyl, Octyl, Nonyl, Decyl, Dodecyl, Tridecyl, Tetradecyl, Pentadecyl.

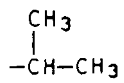, 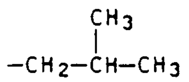, 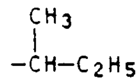, 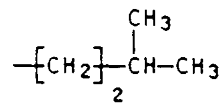, 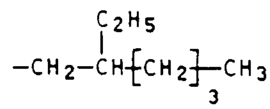,

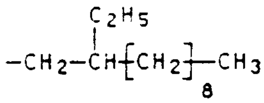, 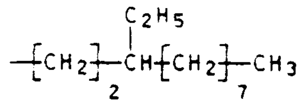 und 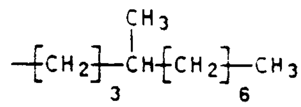.

Als Oxaalkyl kommen für $R^1$ , $R^2$, $R^3$ im einzelnen z.B. in Betracht:

$-CH_2-CH_2-O-C_4H_9$, $-[CH_2-CH_2-O]_2-C_4H_9$, $-[CH_2-CH_2-O]_3-C_4H_9$, $-[CH_2-CH_2-O]_4-C_4H_9$,

$-CH_2-CH_2-O-Ph$, $-[CH_2-CH_2-O]_2-Ph$, $-[CH_2-CH_2-O]_3-Ph$, $-[CH_2-CH_2-O]_4-Ph$,

$-[CH_2-CH_2-O]_2-CH_3$, $-[CH_2-CH_2-O]_2-C_2H_5$, $-[CH_2-CH_2-O]_2-C_3H_7$, $-[CH_2-CH_2-O]_3-C_2H_5$ und

$-[CH_2-CH_2-O]_4-C_3H_7$

(Ph = Phenyl).

Außerdem betrifft die Erfindung neue Farbstoffe der allgemeinen Formel (VII)

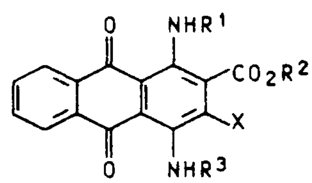

(VII)

in der

X für CN und

$R^1$ für Wasserstoff, lineares oder verzweigtes $C_1$-$C_{20}$-Alkyl, Alkylcarbonyloxyalkyl, Alkoxycarbonyloxyalkyl, Alkoxycarbonylalkyl, Halogenalkyl, Hydroxyalkyl oder Cyanalkyl mit bis zu 20 C-Atomen oder für einen Rest der allgemeinen Formel (II)

$$-[Y-O]_m-R^4 \qquad (II)$$

worin

Y lineares oder verzweigtes $C_2$-$C_6$-Alkylen,

m 1, 2, 3, 4, 5 oder 6 und
$R^4$ $C_1$-$C_4$-Alkyl oder Phenyl bedeuten,
$R^2$ für Reste der allgemeinen Formel (IIa)

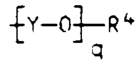

(IIa)

worin
Y lineares oder verzweigtes $C_2$-$C_6$-Alkylen,
q 2, 3, 4, 5 oder 6 und
$R^4$ $C_1$-$C_4$-Alkyl oder Phenyl bedeuten
und
$R^3$ für gegebenenfalls durch $C_1$-$C_{20}$-Alkyl- oder $C_1$-$C_{20}$-Alkoxy-substituiertes Phenyl stehen oder $R^3$ die Bedeutung von $R^1$ hat, wobei $R^2$ auch lineares oder verzweigtes $C_1$-$C_{15}$-Alkyl sein kann, wenn $R^1$ und/oder $R^3$ ungleich Wasserstoff sind,
oder
X für H und
$R^1$ für lineares oder verzweigtes $C_1$-$C_{20}$-Alkyl, Alkylcarbonyloxyalkyl, Alkoxycarbonyloxyalkyl, Alkoxycarbonylalkyl, Halogenalkyl, Hydroxyalkyl oder Cyanalkyl mit je bis zu 20 C-Atomen oder für einen Rest der allgemeinen Formel (II)

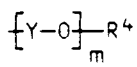

(II)

worin
Y lineares oder verzweigtes $C_2$-$C_6$-Alkylen,
m 1, 2, 3, 4, 5 oder 6 und
$R^4$ $C_1$-$C_4$-Alkyl oder Phenyl bedeuten,
$R^2$ für einen Rest der allgemeinen Formel (IIa)

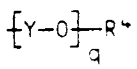

(IIa)

worin
Y lineares oder verzweigtes $C_2$-$C_6$-Alkylen,
q 2, 3, 4, 5 oder 6 und
$R^4$ $C_1$-$C_4$-Alkyl oder Phenyl bedeuten, und
$R^3$ für gegebenenfalls durch $C_1$-$C_{20}$-Alkyl- oder $C_1$-$C_{20}$-Alkoxy-substituiertes Phenyl stehen oder $R^3$ die Bedeutung von $R^1$ hat.

Zur Herstellung der für das Verfahren benötigten Farbstoffträger werden die Farbstoffe in einem geeigneten organischen Lösungsmittel, z. B. Chlorbenzol, Isobutanol, Methyl-ethylketon, Methylenchlorid. Toluol, THF oder deren Mischungen mit einem oder mehreren Rindemitteln gegebenenfalls unter Zugabe von Hilfsmitteln zu einer Druckfarbe verarbeitet. Diese enthält den Farbstoff vorzugsweise in molekulardispers gelöster Form. Die Druckfarbe wird mittels einer Rakel auf den inerten Träger aufgetragen und die Färbung an der Luft getrocknet. Als Bindemittel kommen alle Resins oder Polymermaterialien in Betracht, welche in organischen Lösungsmitteln löslich sind und den Farbstoff an den inerten Träger abriebfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine Auskristallisation des Farbstoffes auftritt. Beispiele für solche Bindematerialien sind Cellulosederivate wie z. B. Ethylcellulose, Ethylhydroxyethylcellulose, Hydroxypropylcellulose, Methylcellulose, Celluloseacetat, Celluloseacetobutyrat, Stärke, Alginate, Alkylresins, Vinylresins, Polyvinylalkohol, Polyvinylacetat, Polyvinylbutyrat, Polyvinylpyrrolidone, ferner Polymere und Copolymere von Acrylaten und deren Derivate wie z. B. Polyacrylsäure, Polymethylmethacrylat, Styrolacrylatcopolymere, Polyesterresins, Polyamidresins, Polyurethanresins sowie natürliche CH-Resins wie Gummi Arabicum.

Bevorzugte Binder sind Ethylcellulose sowie Ethylhydroxyethylcellulose mittlerer bis kleiner Viskositatseinstellungen. Weitere geeignete Bindemittel sind in der DE-A-35 24 519 beschrieben.

Das Verhältnis Binder zu Farbstoff variiert vorzugsweise zwischen 5:1 und 1:1 . Als Hilfsmittel kommen Trennmittel in Betracht, wie sie in den EP-A-227 092, EP-A-192 435 und den dort zitierten Patentanmeldungen spezifiziert sind, darüber hinaus besonders organische Additive, welche das Auskristallisieren der Transferfarbstoffe bei Lagerung und beim Erhitzen des Farbbandes verhindern, wie z. B. Chlolesterin oder Vanillin. Inerte Träger sind z. B. Seiden- , Lösch- oder Pergaminpapier sowie Kunststoffolien mit guter Warmebeständigkeit, z. B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben des Thermokopfes mit dem Trägermaterial zu verhindern. Geeignete Gleitmittel werden z. B. in den Patentanmeldungen EP-A-216 483 und EP-A-227 095 beschrieben. Die Dicke des Farbstoff-Trägers beträgt 3 bis 30 µm, vorzugsweise 5 bis 10 µm.

Als Farbstoffnehmerschicht kommen prinzipiell alle temperaturstabilen Kunststoffschichten mit Affinität zu den transferierenden Farbstoffen in Betracht, deren Glasumwandlungstemperatur unter 150 °C liegen sollte, wie z. B. modifizierte Polycarbonate und Polyester. Geeignete Rezepturen für die Nehmerschichtzusammensetzung werden z. B. in den Patentanmeldungen EP-A-227 094, EP-A-133 012, EP-A-133 011, EP-A-111 004, sowie insbesondere in den JP-A-199 997/1986, JP-A-283 595/1986, JP-A-237 694/1986 und JP-A-127 392/1986 ausführlich beschrieben.

Die Übertragung erfolgt mittels eines Thermokopfes, der auf Temperaturen $\geqq$ 300 °C aufheizbar sein muß, damit der Farbstofftransfer in Zeitbereich t: $0 < t < 15$ msec erfolgen kann. Dabei migriert der Farbstoff aus dem Transferblatt und diffundiert in die Oberflächenbeschichtung des Aufnahmemediums.

Einzelheiten der Herstellung können den Beispielen entnommer werden, in denen sich Angaben über Teile und Prozente, sofern nicht anders vermerkt, auf das Gewicht beziehen.

I. Herstellung der Farbstoffe und deren Vorstufen.

Diese erfolgt nach bekannten oder an sich bekannten Verfahren.

Beispiel 1

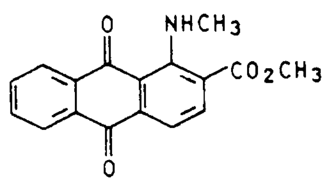

141 g 2-Carbonsäure-1-methylamino-anthrachinon wurden in 1000 ml DMF unter Zugabe von 207 g $K_2CO_3$ mit 142 ml Dimethylsulfat 7 Stunden bei 70 °C behandelt. Das Reaktionsgemisch wurde in Eiswasser/HCl gegeben, 2-Carbonsäuremethylester-1-methylamino-anthrachinon abgesaugt und mit Wasser gewaschen (Ausbeute > 99 % d. Th. , $\lambda_{max}$ ($CH_2Cl_2$): 510 nm).

Analog wurde folgendes Anthrachinon erhalten:

Beispiel 2 (z.Vgl.)

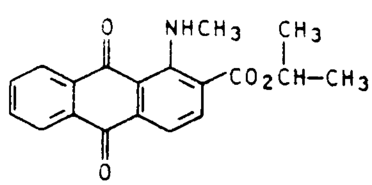

$\lambda_{max}$ ($CH_2Cl_2$): 511 nm

Beispiel 3 (z.Vgl.)

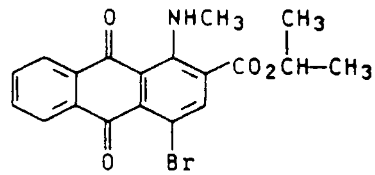

59,04 g 2-Carbonsäureisopropylester-1-methylamino-anthrachinon wurden in 800 ml Eisessig mit 44,3 g wasserfreiem Natriumacetat und katalytischen Mengen Kaliumjodid versetzt. Bei 10 bis 15 °C wurden 20,5 ml Brom zugetropft. Nach 3 Stunden bei 15 bis 20 °C wurde das Reaktionsgemisch abgesaugt und mit Methanol/Wasser gewaschen ($\lambda_{max}$ ($CH_2Cl_2$): 518 nm).

Analog wurde das folgende Bromanthrachinon erhalten:

Beispiel 4

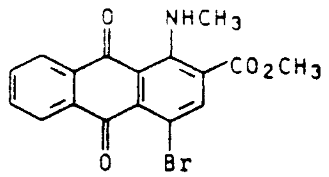

$\lambda_{max}$ ($CH_2Cl_2$): 518 nm

Beispiel 5 (z.Vgl.)

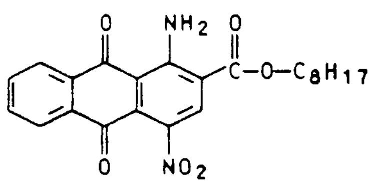

Eine Mischung aus 24 ml n-Octanol, 21,5 ml Triethylamin und 50 ml Toluol wurde bei Raumtemperatur mit 49,6 g 1-Amino-2-carbonsäurechlorid-4-nitroanthrachinon versetzt, auf 50 °C erwärmt und 90 Minuten gerührt. Nach Abkühlen auf Raumtemperatur wurden 200 ml Methanol zugegeben, der Niederschlag abgesaugt und mit Wasser gewaschen ($\lambda_{max}$ ($CH_2Cl_2$): 485 nm).

Analog wurden die folgenden 1-Amino-4-nitroanthrachinone erhalten:

Beispiel 6 (z.Vgl.)

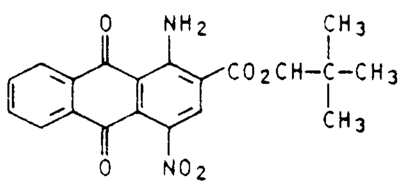

$\lambda_{max}$ ($CH_2Cl_2$): 486 nm

Beispiel 7

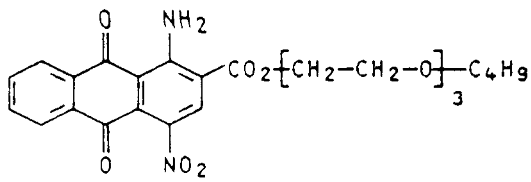

486 nm

Beispiel 8

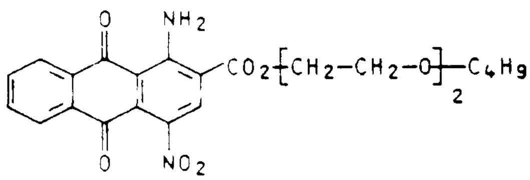

484 nm

Beispiel 9

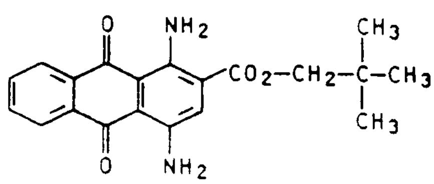

26,8 g des Farbstoffs aus Beispiel 6 wurden in 125 ml DMF nacheinander mit 4,2 ml Triethylamin und 20,12 g Ascorbinsäure versetzt und 3 Stunden bei 100 °C gerührt. Nach Abkühlen auf Raumtemperatur wurden 700 ml Wasser zugegeben, abgesaugt und mit Wasser nachgewaschen ($\lambda_{max}$ ($CH_2Cl_2$): 621 nm).

Analog wurden die beiden folgenden 1,4-Diaminoanthrachinone erhalten:

Beispiel 10

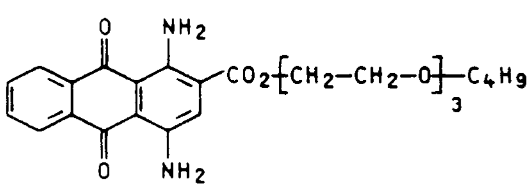

$\lambda_{max}$ ($CH_2Cl_2$): 621 nm

Beispiel 11

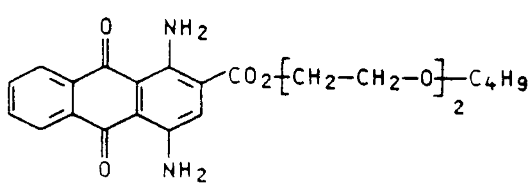

621 nm

Beispiel 12

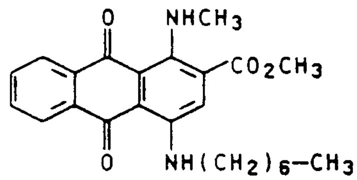

11,22 g des Farbstoffs aus Beispiel 4 wurden in 100 ml DMF mit 100 ml n-Heptylamin und 30 g Kupferacetat 3 Minuten bei 100 °C behandelt, Dann wurde abgekühlt, mit Methanol verdünnt, auf Eis gefällt und abgesaugt ($\lambda_{max}$ ($CH_2Cl_2$): 667 nm).

Analog wurde folgendes Anthrachinon erhalten:

Beispiel 13

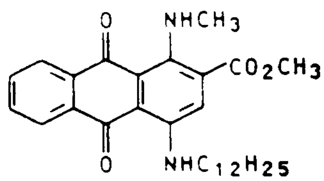

$\lambda_{max}$ ($CH_2Cl_2$): 665 nm

Beispiel 14

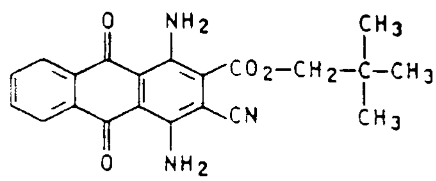

3,5 g des Farbstoffs aus Beispiel 9 wurden in 60 ml DMSO eingetragen und unter Rühren mit 1,9 g $NH_4HCO_3$ und 1,2 g NaCN versetzt. Nach 5 Minuten bei 50 °C wurde der Kolbeninhalt in 700 ml Wasser eingerührt und abgesaugt ($\lambda_{max}$ ($CH_2Cl_2$): 637 nm).

Analog wurden die folgenden Anthrachinone erhalten:

Beispiel 15

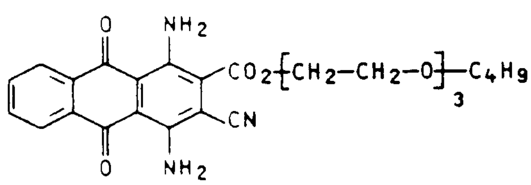

$\lambda_{max}$ ($CH_2Cl_2$): 640 nm

Beispiel 16

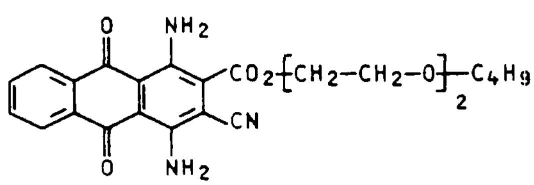

640 nm

Beispiel 17

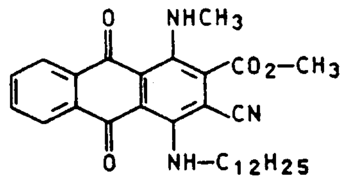

669 nm

II. Transfer der Farbstoffe

Um das Transferverhalten der Farbstoffe quantitativ und in einfacher Weise prüfen zu können, wurde der Thermotransfer mit großflächigen Heizbacken statt eines Thermokopfes durchgeführt, wobei die Transfertemperatur T im Bereich 70 °C < T < 120 °C variiert und die Transferzeit t auf 2 Minuten festgelegt wird.

A) Allgemeines Rezept für die Beschichtung der Träger mit Farbstoff:
0,25 g bis 2 g Bindemittel werden in 5 bis 10 ml Toluol oder Toluol/Ethanol 8:2 Vol. bei 40 bis 50 °C gelost. Dazu wird eine Lösung aus 0,25 g Farbstoff und gegebenenfalls 0,01 g bis 0,2 g Hilfsmittel in 3 bis 8 ml Lösungsmittel, z. B. Tetrahydrofuran, Chlorbenzol, Methylethylketon, Toluol oder Gemische davon eingerührt. Die so erhaltene Druckpaste wird mit einer 30 µ bis 80 µ Rakel ein oder mehrere Male auf eine 6 µ bis 10 µ dicke Polyesterfolie abgezogen und mit einem Fön getrocknet.

B) Prüfung auf thermische Transferierbarkeit:
Die verwendeten Farbstoffe wurden in der folgenden Weise geprüft: Die den zu prüfenden Farbstoff in der Beschichtungsmasse (Vorderseite) enthaltende Polyesterfolie (Geber) wird mit der Vorderseite auf kommerziell erhältliches Hitachi Color Video Print Paper (Nehmer) gelegt und aufgedrückt. Geber/Nehmer werden dann mit Aluminiumfolie umwickelt und zwischen zwei beheizten Platten bei verschiedenen Temperaturen T im Temperaturintervall 70 °C < T < 120 °C erhitzt. Die in die glänzende Kunststoffschicht des Hitachi Color Video Print Paper diffundierte Farbstoffmenge ist proportional der optischen Dichte (= Extinktion A).

Letztere wird photometrisch bestimmt. Trägt man den Logarithmus der im Temperaturintervall zwischen 80 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta \left[\frac{1}{T}\right]}$$

Zur vollständigen Charakterisierung wird aus den Auftragungen zusätzlich die Temperatur T*[°C] entnommen, bei der die Extinktion A der angefärbten Nehmerpapiere den Wert 1 erreicht.

Die in der nachfolgenden Tabelle genannten Farbstoffe wurden nach A) verarbeitet und die erhaltenen, mit Farbstoff beschichteten Träger nach B) auf das Transferverhalten geprüft. In der Tabelle sind jeweils die Thermotransferparameter T* und $\Delta E_T$ aufgeführt sowie die Absorptionsmaxima der Farbstoffe $\lambda_{max}$, gemessen in Methylenchlorid, die verwendeten Binder, Hilfsmittel und Verhältnisse Farbstoff-Binder-Hilfsmittel.

Tabelle

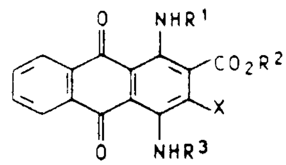

| Bsp.-Nr. | $R^1$ | $R^2$ | $R^3$ | X | $\lambda_{max}$ [nm] | B | HM | F:B:HM | $T^*$ [°C] | $\Delta E_T$ $\left[\frac{kcal}{mol}\right]$ |
|---|---|---|---|---|---|---|---|---|---|---|
| II.1 | H | $[CH_2-CH_2-O]_3-C_4H_9$ | H | CN | 640 | EC | — | 1:2 | 79,6 | 14,1 |
| II.2 | H | $[CH_2-CH_2-O]_3-C_4H_9$ | H | CN | 640 | EHEC | — | 1:2 | 71,8 | 8,8 |
| II.3 | H | $[CH_2-CH_2-O]_3-C_4H_9$ | H | CN | 640 | EC | Chol | 1:2:0,75 | 76,0 | 16,3 |
| II.4 | H | $[CH_2-CH_2-O]_2-C_4H_9$ | H | CN | 640 | EC | — | 1:2 | 85,7 | 17,6 |
| II.5 | $CH_3$ | $CH_3$ | $C_{12}H_{25}$ | CN | 669 | EC | — | 1:2 | 107,4 | 21,2 |

B = Binder
HM = Hilfsmittel
EC = Ethylcellulose
EHEC = Ethylhydroxyethylcellulose
Chol = Cholesterin
F = Farbstoff

## Patentansprüche

**1.** Verfahren zur Übertragung von Farbstoffen von einem Träger auf einen Acceptor mit Hilfe eines Thermokopfes, dadurch gekennzeichnet, daß man einen Träger verwendet, auf dem sich ein oder mehrere Farbstoffe der Formel (I)

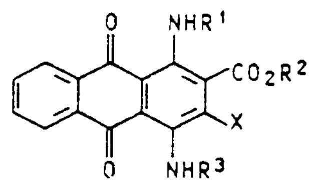

(I)

befinden, in der

X für H oder CN

$R^1$, $R^2$ und $R^3$ unabhängig voneinander für lineares oder verzweigtes $C_1$-$C_{20}$-Alkyl, für Alkylcarbonyloxyalkyl, Alkoxycarbonyloxyalkyl, Alkoxycarbonylalkyl, Halogenalkyl, Hydroxyalkyl oder Cyanalkyl, wobei diese substituierten Alkylreste insgesamt bis zu

20 C-Atome aufweisen können, für gegebenenfalls durch $C_1$-$C_{20}$-Alkyl oder $C_1$-$C_{20}$-Alkoxy substituiertes Benzyl oder Phenyl oder für Reste der allgemeinen Formel (II)

$$-\!\left[Y-O\right]_m\!-R^4 \qquad (II)$$

stehen, worin

Y lineares oder verzweigtes $C_2$-$C_6$-Alkylen,
m 1, 2, 3, 4, 5 oder 6 und
$R^4$ $C_1$-$C_4$-Alkyl oder Phenyl bedeuten,

und

$R^1$ und $R^3$ unabhängig voneinander auch Wasserstoff bedeuten können,
mit der Maßgabe, daß
wenn X = H ist, $R^1$ und $R^3$ gegebenenfalls substituiertes Alkyl oder gegegebenenfalls substituiertes Phenyl bedeuten,
wenn X = H und $R^1$ = H ist, $R^3$ gegebenenfalls durch Alkyl oder Alkoxy substituiertes Phenyl bedeutet, und
wenn X = CN und $R^1$ = $R^3$ = H ist, $R^2$ einen Rest der allgemeinen Formel (IIa)

$$-\!\left[Y-O\right]_q\!-R^4 \qquad (IIa)$$

worin

Y für lineares oder verzweigtes $C_2$-$C_6$-Alkylen,
q für 2, 3, 4, 5 oder 6 und
$R^4$ für $C_1$-$C_4$-Alkyl oder Phenyl steht,

bedeutet.

**2.** Verfahren nach Anspruch 1, dadurch gekennzeichnet, daß sich auf dem Träger ein oder mehrere Anthrachinonfarbstoffe der Formel (III)

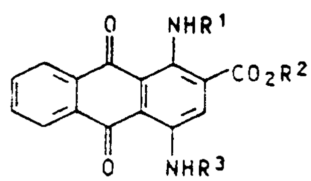

(III)

befinden, in der

$R^1$ für lineares $C_1$-$C_{15}$-Alkyl,
$R^2$ für lineares oder verzweigtes $C_1$-$C_{15}$-Alkyl oder für einen Rest der allgemeinen Formel (IX)

$$-\!\left[Z-O\right]_n\!-R^4 \qquad (IX)$$

worin

Z lineares oder verzweigtes $C_2$-$C_4$-Alkylen,
n 1, 2, 3 oder 4 und
$R^4$ $C_1$-$C_4$-Alkyl oder Phenyl bedeuten und
$R^3$ für lineares oder verzweigtes $C_1$-$C_{15}$-Alkyl oder für gegebenenfalls durch $C_1$-$C_{15}$-Alkyl- oder $C_1$-$C_{15}$-Alkoxy substituiertes Phenyl stehen.

**3.** Verfahren nach Anspruch 2, dadurch gekennzeichnet, daß sich auf dem Träger ein oder mehrere Anthrachinonfarbstoffe der Formel (IV)

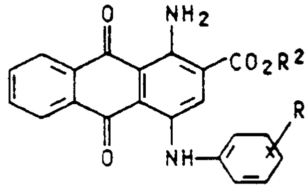

(IV)

befinden, in der $R^2$ die in Anspruch 2 angegebene Bedeutung hat und $R^5$ $C_1$-$C_{15}$-Alkyl oder $C_1$-$C_{15}$-Alkoxy ist.

**4.** Verfahren nach Anspruch 1, dadurch gekennzeichnet, daß sich auf dem Träger ein oder mehrere Anthrachinonfarbstoffe der Formel (V)

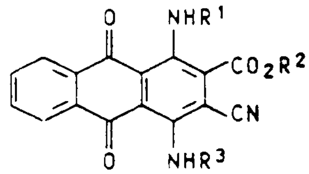

(V)

befinden, in der

| | |
|---|---|
| $R^2$ | für lineares oder verzweigtes $C_1$-$C_{15}$-Alkyl oder ein Rest der allgemeinen Formel (II) |

$$\left[Y-O\right]_m-R^4 \qquad (II)$$

| | |
|---|---|
| | worin |
| Y | lineares oder verzweigtes $C_2$-$C_6$-Alkylen, |
| m | 1, 2, 3, 4, 5 oder 6 und |
| $R^4$ | $C_1$-$C_4$-Alkyl oder Phenyl bedeuten, und |
| $R^1$ und $R^3$ | unabhängig voneinander für Wasserstoff, Alkylcarbonyloxyalkyl, Alkoxycarbonyloxyalkyl oder Alkoxycarbonylalkyl, wobei diese Reste insgesamt bis zu 20 C-Atome aufweisen können, oder für gegebenenfalls durch $C_1$-$C_{20}$-Alkyl oder $C_1$-$C_{20}$-Alkoxy substituiertes Phenyl oder Benzyl stehen oder $R^1$ und/oder $R^3$ die Bedeutung von $R^2$ haben, |

mit der Maßgabe, daß, wenn $R^1$ = $R^3$ = H ist, $R^2$ einen Rest der allgemeinen Formel (IIa)

$$\left[Y-O\right]_q R^4 \qquad (IIa)$$

worin q für 2, 3, 4, 5 oder 6 steht, bedeutet.

**5.** Verfahren nach Anspruch 4, dadurch gekennzeichnet, daß sich auf dem Träger ein oder mehrere Farbstoffe der Formel (V)

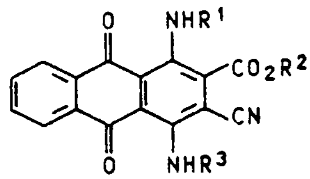

(V)

befinden, in der

| | |
|---|---|
| $R^1$, $R^2$ und $R^3$ | unabhängig voneinander für lineares oder verzweigtes $C_1$-$C_{15}$-Alkyl oder für Reste der allgemeinen Formel (VI) |

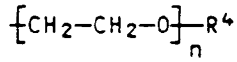

(VI)

stehen, worin

| | |
|---|---|
| n | 1, 2, 3 oder 4 und |
| $R^4$ | $C_1$-$C_4$-Alkyl oder Phenyl bedeuten, und wobei |
| $R^1$ | auch Wasserstoff sein kann. |

**6.** Verbindungen der allgemeinen Formel (VII)

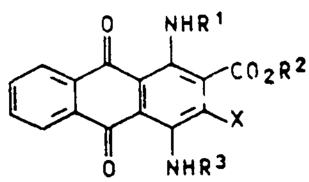

(VII)

in der

a)

| | |
|---|---|
| X | für CN und |
| $R^1$ | für Wasserstoff, lineares oder verzweigtes $C_1$-$C_{20}$-Alkyl, Alkylcarbonyloxyalkyl, Alkoxycarbonyloxyalkyl, Alkoxycarbonylalkyl, Halogenalkyl, Hydroxyalkyl oder Cyanalkyl, wobei diese substituierten Alkylreste insgesamt bis zu 20 C-Atome aufweisen können oder für einen Rest der allgemeinen Formel (II) |

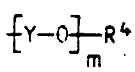

(II),

worin

| | |
|---|---|
| Y | lineares oder verzweigtes $C_2$-$C_6$-Alkylen, |
| m | 1, 2, 3, 4, 5 oder 6 und |
| $R^4$ | $C_1$-$C_4$-Alkyl oder Phenyl bedeuten, und |
| $R^2$ | für einen Rest der allgemeinen Formel (IIa) |

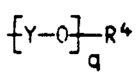

**(IIa)**

worin

| | |
|---|---|
| Y | lineares oder verzweigtes $C_2$-$C_6$-Alkylen, |
| q | 2, 3, 4, 5 oder 6 und |

$R^4$ $C_1$-$C_4$-Alkyl oder Phenyl bedeuten, und

$R^3$ für gegebenenfalls durch $C_1$-$C_{20}$-Alkyl oder $C_1$-$C_{20}$-Alkoxy substituiertes Phenyl stehen oder $R^3$ die Bedeutung von $R^1$ hat, wobei, wenn $R^1$ und/oder $R^3$ nicht Wasserstoff sind, $R^2$ auch lineares oder verzweigtes $C_1$-$C_{15}$-Alkyl sein kann,

oder

b)

X für Wasserstoff und

$R^1$ für lineares oder verzweigtes $C_1$-$C_{20}$-Alkyl, Alkylcarbonyloxyalkyl, Alkoxycarbonyloxyalkyl, Alkoxycarbonylalkyl, Halogenalkyl, Hydroxyalkyl oder Cyanalkyl mit je bis zu 20 C-Atomen oder für einen Rest der allgemeinen Formel (II)

$$\left[Y-O\right]_m R^4 \qquad (II)$$

worin

Y lineares oder verzweigtes $C_2$-$C_6$-Alkylen,

m 1, 2, 3, 4, 5 oder 6 und

$R^4$ $C_1$-$C_4$-Alkyl oder Phenyl bedeuten,

$R^2$ für einen Rest der allgemeinen Formel (IIa)

$$\left[Y-O\right]_q R^4 \qquad (IIa)$$

worin

Y lineares oder verzweigtes $C_2$-$C_6$-Alkylen,

q 2, 3, 4, 5 oder 6 und

$R^4$ $C_1$-$C_4$-Alkyl oder Phenyl bedeuten, und

$R^3$ für gegebenenfalls durch $C_1$-$C_{20}$-Alkyl oder $C_1$-$C_{20}$-Alkoxy substituiertes Phenyl stehen, oder $R^3$ die Bedeutung von $R^1$ hat.

## Claims

**1.** A process for transferring dyes from a transfer to an acceptor by means of a thermal printing head, which comprises using a transfer on which there is or are present one or more dyes of the formula (I)

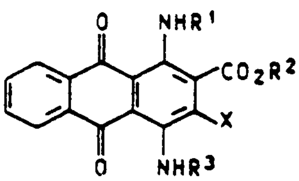

(I)

where

X is H or CN,

$R^1$, $R^2$ and $R^3$ independently of each other are linear or branched $C_1$-$C_{20}$-alkyl; alkylcarbonyloxyalkyl, alkoxycarbonyloxyalkyl, alkoxycarbonylalkyl, haloalkyl, hydroxyalkyl or cyanoalkyl, which substituted alkyls may have up to 20 carbon atoms in total; benzyl or phenyl, each of which is unsubstituted or substituted by $C_1$-$C_{20}$-alkyl or $C_1$-$C_{20}$-alkoxy; or radicals of the general formula (II)

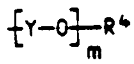 (II)

where

Y is linear or branched $C_2$-$C_6$-alkylene,

m is 1, 2, 3, 4, 5 or 6 and

$R^4$ is $C_1$-$C_4$-alkyl or phenyl,

and

$R^1$ and $R^3$ independently of each other may also be hydrogen,
with the proviso that if X is H, $R^1$ and $R^3$ are each substituted or unsubstituted alkyl or substituted or unsubstituted phenyl, if X is H and $R^1$ is H, $R^3$ is unsubstituted or alkyl- or alkoxy-substituted phenyl, and if X is CN and $R^1$ and $R^3$ are each H, $R^2$ is a radical of the general formula (IIa)

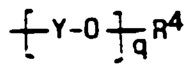 (IIa)

where

Y is linear or branched $C_2$-$C_6$-alkylene,

q is 2, 3, 4, 5 or 6 and

$R^4$ is $C_1$-$C_4$-alkyl or phenyl.

2. A process as claimed in claim 1, wherein there is or are present on the transfer one or more anthraquinone dyes of the formula (III)

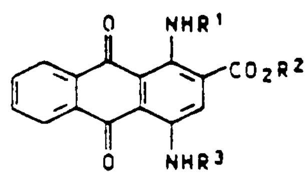 (III)

where

$R^1$ is linear $C_1$-$C_{15}$-alkyl,

$R^2$ is linear or branched $C_1$-$C_{15}$-alkyl or a radical of the general formula (IX)

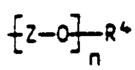 (IX)

where

Z is linear or branched $C_2$-$C_4$-alkylene

n is 1, 2, 3 or 4 and

$R^4$ is $C_1$-$C_4$-alkyl or phenyl, and

$R^3$ is linear or branched $C_1$-$C_{15}$-alkyl or unsubstituted or $C_1$-$C_{15}$-alkyl- or $C_1$-$C_{15}$-alkoxy-substituted phenyl.

3. A process as claimed in claim 2, wherein there is or are present on the transfer one or more anthraquinone dyes of the formula (IV)

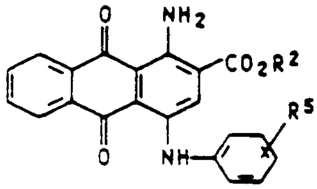

(IV)

where $R^2$ is as defined in claim 2 and $R^5$ is $C_1$-$C_{15}$-alkyl or $C_1$-$C_{15}$-alkoxy.

**4.** A process as claimed in claim 1, wherein there is or are present on the transfer one or more anthraquinone dyes of the formula (V)

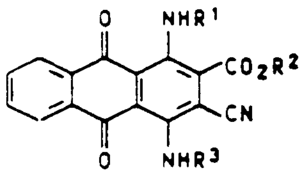

(V)

where

$R^2$ is linear or branched $C_1$-$C_{15}$-alkyl or a radical of the general formula (II)

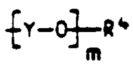

(II)

where

Y is linear or branched $C_2$-$C_6$-alkylene,

m is 1, 2, 3, 4, 5 or 6 and

$R^4$ is $C_1$-$C_4$-alkyl or phenyl, and

$R^1$ and $R^3$ independently of each other are hydrogen, alkylcarbonyloxyalkyl, alkoxycarbonyloxyalkyl or alkoxycarbonylalkyl, which radicals may have up to 20 carbon atoms in total, or phenyl or benzyl, each of which is unsubstituted or substituted by $C_1$-$C_{20}$-alkyl or $C_1$-$C_{20}$-alkoxy, or $R^1$ and/or $R^3$ have the meaning of $R^2$, with the proviso that, if $R^1$ and $R^3$ are each H, $R^2$ is a radical of the general formula (IIa)

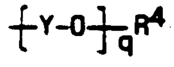

(IIa)

where q is 2, 3, 4, 5 or 6.

**5.** A process as claimed in claim 4, wherein there is or are present on the transfer one or more dyes of the formula (V)

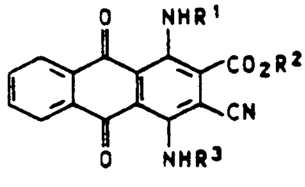

(V)

where

$R^1$, $R^2$ and $R^3$ independently of each other are linear or branched $C_1$-$C_{15}$-alkyl or radicals of the general formula (VI)

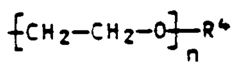

(VI)

where

n is 1, 2, 3 or 4 and

$R^4$ is $C_1$-$C_4$-alkyl or phenyl, and where $R^1$ may also be hydrogen.

6. A compound of the general formula (VII)

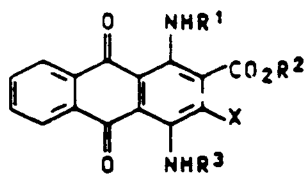

(VII)

where

a)

X is CN and

$R^1$ is hydrogen, linear or branched $C_1$-$C_{20}$-alkyl, alkylcarbonyloxyalkyl, alkoxycarbonyloxyalkyl, alkoxycarbonylalkyl, haloalkyl, hydroxyalkyl or cyanoalkyl, which substituted alkyls may have up to 20 carbon atoms in total, or is a radical of the general formula (II)

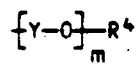

(II),

where

Y is linear or branched $C_2$-$C_6$-alkylene

m is 1, 2, 3, 4, 5 or 6 and

$R^4$ is $C_1$-$C_4$-alkyl or phenyl, and

$R^2$ is a radical of the general formula (IIa)

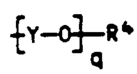

**(IIa)**

where

Y is linear or branched $C_2$-$C_6$-alkylene,

q is 2, 3, 4, 5 or 6 and

$R^4$ is $C_1$-$C_4$-alkyl or phenyl, and

$R^3$ is unsubstituted or $C_1$-$C_{20}$-alkyl- or $C_1$-$C_{20}$-alkoxy-substituted phenyl, or $R^3$ has the meaning of $R^1$, and, if $R^1$ and/or $R^3$ are not hydrogen, $R^2$ may also be linear or branched $C_1$-$C_{15}$-alkyl, or

b)

X is hydrogen and

$R^1$ is linear or branched $C_1$-$C_{20}$-alkyl, alkylcarbonyloxyalkyl, alkoxycarbonyloxyalkyl, alkoxycarbonylalkyl, haloalkyl, hydroxyalkyl or cyanoalkyl, each having up to 20 carbon atoms, or is a radical of the general formula (II)

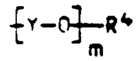

(II)

where

| | |
|---|---|
| Y | is linear or branched $C_2$-$C_6$-alkylene, |
| m | is 1, 2, 3, 4, 5 or 6 and |
| $R^4$ | is $C_1$-$C_4$-alkyl or phenyl, |
| $R^2$ | is a radical of the general formula (IIa) |

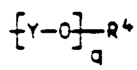

**(IIa)**

where

| | |
|---|---|
| Y | is linear or branched $C_2$-$C_6$-alkylene, |
| q | is 2, 3, 4, 5 or 6 and |
| $R^4$ | is $C_1$-$C_4$-alkyl or phenyl, and |
| $R^3$ | is unsubstituted or $C_1$-$C_{20}$-alkyl- or $C_1$-$C_{20}$-alkoxy-substituted phenyl, or $R^3$ has the meaning of $R^1$. |

**Revendications**

**1.** Procédé de transfert de colorants entre un support et un accepteur au moyen d'une tête thermique, caractérisé en ce qu'on utilise un support sur lequel se trouvent un ou plusieurs colorants de formule (I)

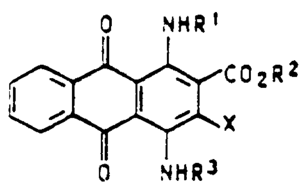

(I)

dans laquelle

| | |
|---|---|
| X | est mis pour H ou CN, |
| $R^1$, $R^2$ et $R^3$ | sont mis chacun, indépendamment les uns des autres, pour un reste alkyle en $C_1$-$C_{20}$ linéaire ou ramifié, pour un reste alkylcarbonyloxyalkyle, alcoxycarbonyloxyalkyle, alcoxycarbonylalkyle, halogénoalkyle, hydroxyalkyle ou cyanoalkyle, ces restes alkyle substitués pouvant comporter jusqu'à 20 atomes de carbone au total, pour un reste benzyle ou phényle éventuellement substitué par un reste alkyle en $C_1$-$C_{20}$ ou alcoxy en $C_1$-$C_{20}$, ou pour un reste de formule générale (II) |

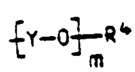

(II)

où

| | |
|---|---|
| Y | représente un reste alkylène en $C_2$-$C_6$ linéaire ou ramifié |
| m | est mis pour 1, 2, 3, 4, 5 ou 6 et |
| $R^4$ | représente un reste alkyle en $C_1$-$C_4$ ou phényle, et |
| $R^1$ et $R^3$ | peuvent aussi représenter chacun, indépendamment l'un de l'autre, un atome d'hydrogène, |

étant spécifié que
quand X = H, $R^1$ et $R^3$ représentent des restes alkyle éventuellement substitués ou phényle éventuellement substitués,
quand X = H et $R^1$ = H, $R^3$ représente un reste phényle éventuellement substitué par un groupement alkyle ou alcoxy, et
quand X = CN et $R^1$ = $R^3$ = H, $R^2$ représente un reste de formule générale (IIa)

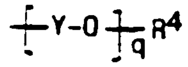

**(IIa)**

où
Y est mis pour un reste alkylène en $C_2$-$C_6$ linéaire ou ramifié,
q est mis pour 2, 3, 4, 5 ou 6 et
$R^4$ est mis pour un reste alkyle en $C_1$-$C_4$ ou phényle.

**2.** Procédé selon la revendication 1, caractérisé en ce qu'il se trouve, sur le support, un ou plusieurs colorants de la famille de l'anthraquinone de formule (III)

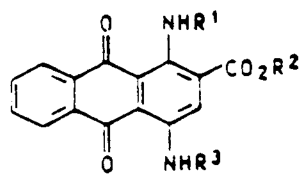

(III)

dans laquelle
$R^1$ est mis pour un reste alkyle en $C_1$-$C_{15}$ linéaire,
$R^2$ est mis pour un reste alkyle en $C_1$-$C_{15}$ linéaire ou ramifié ou pour un reste de formule générale (IX)

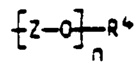

(IX)

où
Z représente un reste alkylène en $C_2$-$C_4$ linéaire ou ramifié,
n est mis pour 1, 2, 3 ou 4 et
$R^4$ représente un reste alkyle en $C_1$-$C_4$ ou phényle
et
$R^3$ est mis pour un reste alkyle en $C_1$-$C_{15}$ linéaire ou ramifié ou pour un reste phényle éventuellement substitué par un groupement alkyle en $C_1$-$C_{15}$ ou alcoxy en $C_1$-$C_{15}$.

**3.** Procédé selon la revendication 2, caractérisé en ce qu'il se trouve, sur le support, un ou plusieurs colorants de la famille de l'anthraquinone de formule (IV)

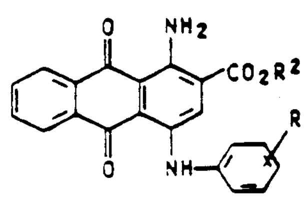

(IV)

dans laquelle $R^2$ a la signification indiquée dans la revendication 2 et $R^5$ est un reste alkyle en $C_1$-$C_{15}$ ou alcoxy en $C_1$-$C_{15}$.

4. Procédé selon la revendication 1, caractérisé en ce qu'il se trouve, sur le support, un ou plusieurs colorants de la famille de l'anthraquinone de formule (V)

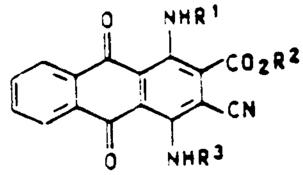

(V)

dans laquelle

$R^2$ est mis pour un reste alkyle en $C_1$-$C_{15}$ linéaire ou ramifié ou pour un reste de formule générale (II)

$$-\!\left[Y-O\right]_m R^4 \quad (II)$$

où

Y représente un reste alkylène en $C_2$-$C_6$ linéaire ou ramifié

m est mis pour 1, 2, 3, 4, 5 ou 6 et

$R^4$ représente un reste alkyle en $C_1$-$C_4$ ou phényle,

et

$R^1$ et $R^3$ sont mis chacun, indépendamment l'un de l'autre, pour un atome d'hydrogène, pour un reste alkylcarbonyloxyalkyle, alcoxycarbonyloxyalkyle ou alcoxycarbonylalkyle, ces restes pouvant comporter jusqu'à 20 atomes de carbone au total, ou pour un reste phényle ou benzyle éventuellement substitué par un reste alkyle en $C_1$-$C_{20}$ ou alcoxy en $C_1$-$C_{20}$, ou $R^1$ et/ou $R^3$ ont la signification de $R^2$,

étant spécifié que quand $R^1$ = $R^3$ = H, $R^2$ représente un reste de formule générale (IIa)

$$-\!\left[Y-O\right]_q R^4 \quad \textbf{(IIa)}$$

où q est mis pour 2, 3, 4, 5 ou 6.

5. Procédé selon la revendication 4, caractérisé en ce qu'il se trouve, sur le support, un ou plusieurs colorants de formule (V)

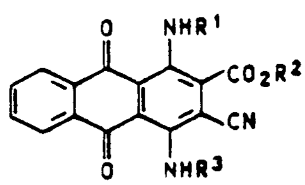

(V)

dans laquelle

$R^1$, $R^2$ et $R^3$ sont mis, indépendamment les uns des autres, pour des restes alkyle en $C_1$-$C_{15}$ ou pour des restes de formule générale (VI)

$$-\!\left[CH_2-CH_2-O\right]_n R^4 \quad (VI)$$

où

n est mis pour 1, 2, 3 ou 4 et

$R^4$ représente un reste alkyle en $C_1$-$C_4$ ou phényle,

$R^1$ pouvant aussi être un atome d'hydrogène.

**6.** Composés de formule générale (VII)

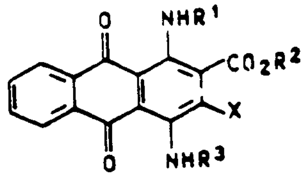

(VII)

dans laquelle

a)

X est mis pour CN et

$R^1$ est mis pour un atome d'hydrogène, pour un reste alkyle en $C_1$-$C_{20}$ linéaire ou ramifié, pour un reste alkylcarbonyloxyalkyle, alcoxycarbonyloxyalkyle, alcoxycarbonylalkyle, halogénoalkyle, hydroxyalkyle ou cyanoalkyle, ces restes alkyle substitués pouvant comporter jusqu'à 20 atomes de carbone au total, ou pour un reste de formule générale (II)

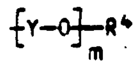

(II),

où

Y représente un reste alkylène en $C_2$-$C_6$ linéaire ou ramifié

m est mis pour 1, 2, 3, 4, 5 ou 6 et

$R^4$ représente un reste alkyle en $C_1$-$C_4$ ou phényle,

$R^2$ est mis pour un reste de formule générale (IIa)

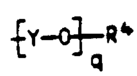

**(IIa)**

où

Y représente un reste alkylène en $C_2$-$C_6$ linéaire ou ramifié,

q est mis pour 2, 3, 4, 5 ou 6 et

$R^4$ représente un reste alkyle en $C_1$-$C_4$ ou phényle,

et

$R^3$ est mis pour un reste phényle éventuellement substitué par un groupement alkyle en $C_1$-$C_{20}$ ou alcoxy en $C_1$-$C_{20}$, ou $R^3$ a la signification de $R^1$,

$R^2$ pouvant être aussi un reste alkyle en $C_1$-$C_{15}$ linéaire ou ramifié lorsque $R^1$ et/ou $R^3$ ne sont pas des atomes d'hydrogène, ou

b)

X est mis pour un atome d'hydrogène et

$R^1$ est mis pour un reste alkyle en $C_1$-$C_{20}$ linéaire ou ramifié, alkylcarbonyloxyalkyle, alcoxycarbonyloxyalkyle, alcoxycarbonylalkyle, halogénoalkyle, hydroxyalkyle ou cyanoalkyle comportant chacun jusqu'à 20 atomes de carbone ou pour un reste de formule générale (II)

$$-[Y-O]_m-R^4 \qquad (II)$$

où

Y représente un reste alkylène en $C_2$-$C_6$ linéaire ou ramifié,

m est mis pour 1, 2, 3, 4, 5 ou 6 et

$R^4$ représente un reste alkyle en $C_1$-$C_4$ ou phényle,

$R^2$ est mis pour un reste de formule générale (IIa)

$$-[Y-O]_q-R^4 \qquad (IIa)$$

où

Y représente un reste alkylene en $C_2$-$C_6$ linéaire ou ramifié,

q est mis pour 2, 3, 4, 5 ou 6 et

$R^4$ représente un reste alkyle en $C_1$-$C_4$ ou phényle,

et

$R^3$ est mis pour un reste phényle eventuellement substitué par un groupement alkyle en $C_1$-$C_{20}$ ou alcoxy en $C_1$-$C_{20}$, ou $R^3$ a la signification de $R^1$.